(19) 

Europäisches
Patentamt

European
Patent Office

Office européen
des brevets

(11) **EP 4 524 650 A1**

(12) **EUROPEAN PATENT APPLICATION**
published in accordance with Art. 153(4) EPC

(43) Date of publication:
19.03.2025 Bulletin 2025/12

(21) Application number: 23803564.6

(22) Date of filing: 10.05.2023

(51) International Patent Classification (IPC):
*G03B 17/56* (2021.01)     *G03B 15/00* (2021.01)
*G03B 37/00* (2021.01)     *H04N 23/50* (2023.01)
*H04N 23/51* (2023.01)     *H04N 23/695* (2023.01)

(52) Cooperative Patent Classification (CPC):
G03B 15/00; G03B 17/56; G03B 37/00;
H04N 23/50; H04N 23/51; H04N 23/695

(86) International application number:
PCT/JP2023/017494

(87) International publication number:
WO 2023/219089 (16.11.2023 Gazette 2023/46)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 13.05.2022 JP 2022079265
28.04.2023 JP 2023074206

(71) Applicant: CANON KABUSHIKI KAISHA
Tokyo 146-8501 (JP)

(72) Inventors:
• MIZUTANI, Shoma
  Tokyo 146-8501 (JP)
• NISHIKAWA, Satoshi
  Tokyo 146-8501 (JP)

(74) Representative: Canon Europe Limited
European Intellectual Property Group
4 Roundwood Avenue
Stockley Park
Uxbridge UB11 1AF (GB)

(54) **RETAINING DEVICE, CAMERA MODULE, AND IMAGING SYSTEM**

(57)     A holding apparatus that is insertable into a transparent tubular member includes: a holding portion that is capable of holding an imaging apparatus including an imaging optical system and an imaging device for capturing an image of an outside of the tubular member; and a drive portion that is capable of moving the holding apparatus in the tubular member.

FIG. 3

**EP 4 524 650 A1**

## Description

Technical Field

The present invention relates to a holding apparatus, a camera unit, and an imaging system.

Background Art

An autonomous vehicle and a remote imaging system described in PTL 1 are known as a technology that enables remote observation of animals and the like that are exhibited in a zoo, an aquarium, and the like. With the remote imaging system using the autonomous vehicle described in PTL 1, a user can remotely operate the autonomous vehicle including an imaging unit. In accordance with an operation by a user, the autonomous vehicle can move along a predetermined path that is set, for example, around an animal exhibit area. The imaging unit can start and stop capturing a still image or a moving image and can swing in a vertical direction or a horizontal direction in accordance with a remote operation by a user.

Citation List

Patent Literature

PTL 1: Japanese Patent Laid-Open No. 2021-176024

Summary of Invention

Technical Problem

However, with the existing technology described in PTL 1, it may be difficult to stably capture an image of an animal as the animal may contact the autonomous vehicle if the autonomous vehicle directly approaches the animal without a fence or a cage therebetween.

An object of the present invention is to provide a holding apparatus, a camera unit, and an imaging system with which it is possible to capture an image of a subject more stably than before.

Solution to Problem

In order to achieve the object, a holding apparatus according to the present invention is a holding apparatus that is insertable into a transparent tubular member, including: a holding portion that is capable of holding an imaging apparatus including an imaging optical system and an imaging device for capturing an image of an outside of the tubular member; and a drive portion that is capable of moving the holding apparatus in the tubular member.

In order to achieve the object, a holding apparatus according to the present invention is a holding apparatus that is insertable into a tubular member, including: a holding portion that is capable of holding an imaging apparatus including an imaging optical system and an imaging device; a drive portion that is capable of moving the holding apparatus in the tubular member; and a passive portion that is moved by the drive portion. The holding portion is supported so as to be sandwiched between the passive portion and the drive portion.

In order to achieve the object, a camera unit according to the present invention is a camera unit that is insertable into a transparent tubular member, including: an imaging apparatus including an imaging optical system and an imaging device for capturing an image of an outside of the tubular member; a holding portion that is capable of holding the imaging apparatus; and a drive portion that is capable of moving the camera unit in the tubular member.

In order to achieve the object, a camera unit according to the present invention is a camera unit that is insertable into a tubular member, including: an imaging apparatus including an imaging optical system and an imaging device; a holding portion that is capable of holding the imaging apparatus; a drive portion that is capable of moving the camera unit in the tubular member; and a passive portion that is moved by the drive portion. The holding portion is supported so as to be sandwiched between the passive portion and the drive portion.

In order to achieve the object, an imaging system according to the present invention includes: a transparent tubular member; and a camera unit that is insertable into the transparent tubular member, the camera unit including an imaging apparatus including an imaging optical system and an imaging device for capturing an image of an outside of the tubular member, a holding portion that is capable of holding the imaging apparatus, and a drive portion that is capable of moving the camera unit in the tubular member.

In order to achieve the object, an imaging system according to the present invention includes: a tubular member; and a camera unit that is insertable into the tubular member, the camera unit including an imaging apparatus including an imaging optical system and an imaging device, a holding portion that is capable of holding the imaging apparatus, a drive portion that is capable of moving the camera unit in the tubular member, and a passive portion that is moved by the drive portion. The holding portion is configured to be supported so as to be sandwiched between the passive portion and the drive portion.

Advantageous Effects of Invention

With the present invention, it is possible to provide a holding apparatus, a camera unit, and an imaging system with which it is possible to capture an image of a subject more stably than before.

Brief Description of Drawings

[Fig. 1] Fig. 1 is a block diagram of an imaging system according to a first embodiment.
[Fig. 2] Fig. 2 illustrates a state in which a holding apparatus according to the first embodiment is inserted into a tubular member.
[Fig. 3] Fig. 3 is a perspective view of the holding apparatus according to the first embodiment.
[Fig. 4] Fig. 4 is an exploded perspective view of the holding apparatus according to the first embodiment.
[Fig. 5] Fig. 5 is sectional view of the holding apparatus according to the first embodiment taken along line A-A.
[Fig. 6] Fig. 6 is sectional view of the holding apparatus according to the first embodiment taken along line B-B.
[Fig. 7] Fig. 7 is sectional view of the holding apparatus according to the first embodiment taken along line C-C.
[Fig. 8A] Fig. 8A is a sectional view illustrating a rotation mechanism of a drive portion included in the holding apparatus according to the first embodiment.
[Fig. 8B] Fig. 8B is a sectional view illustrating the rotation mechanism of the drive portion included in the holding apparatus according to the first embodiment.
[Fig. 9] Fig. 9 is a sectional view illustrating a support mechanism of the drive portion included in the holding apparatus according to the first embodiment.
[Fig. 10] Fig. 10 illustrates the configuration of a modification according to the first embodiment.
[Fig. 11] Fig. 11 illustrates a state in which a holding apparatus of a modification according to the first embodiment is inserted into the tubular member.
[Fig. 12] Fig. 12 is a perspective view of the holding apparatus of the modification according to the first embodiment.

Description of Embodiments

[First Embodiment]

[Configuration of Imaging System IS]

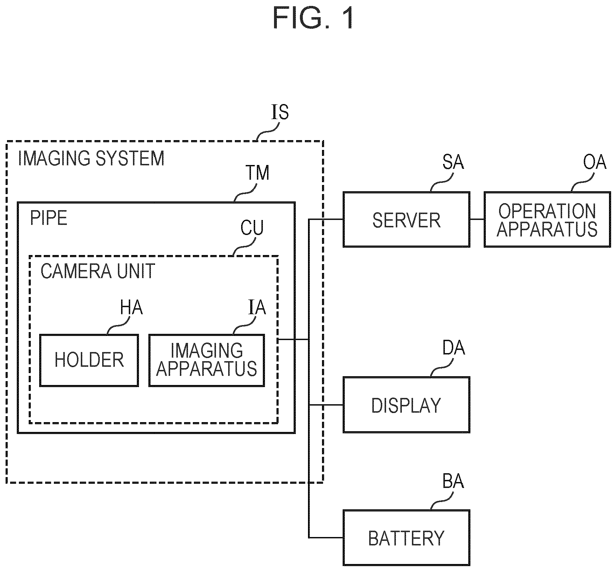

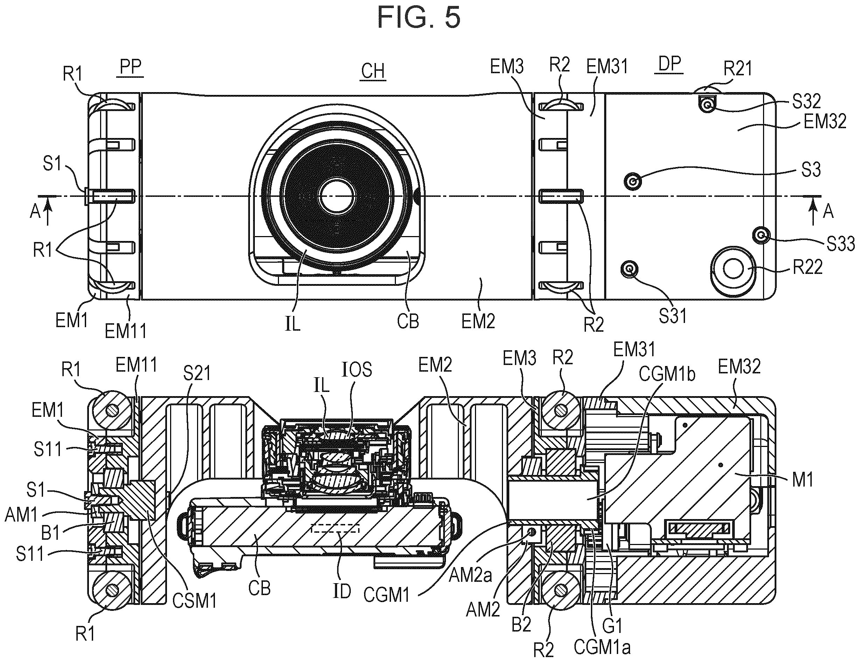

Fig. 1 is a block diagram of an imaging system IS according to the present embodiment. The imaging system IS includes: a camera unit (camera apparatus) CU including a holder (holding apparatus) HA and an imaging apparatus IA; and a pipe (tubular member) TM into which the camera unit CU is inserted. The imaging apparatus IA includes an imaging optical system IOS and an imaging device ID (see Fig. 5) for capturing an image of the outside of the pipe TM.

In the present embodiment, the constituent elements described above are collectively referred to as the imaging system IS. However, a set of constituent elements including the constituent elements described above may be referred to as the imaging system IS. For example, in addition to the constituent elements described above, a server SA connected to the imaging apparatus IA, a display DA that displays an image captured by the imaging apparatus IA, and a battery BA may be included in and referred to as the imaging system IS. The imaging apparatus IA and the server SA are connected wirelessly or by wire. The battery BA supplies electric power to a motor M1 and a motor M2 described below.

The server SA can receive an image captured by the imaging apparatus IA, can receive a signal from an operation apparatus OA such as a smartphone, a tablet, or a controller, and can transmit the signal to the imaging portion IA. With such a configuration, a user of the imaging system IS who is, for example, in a zoo or at home can operate the imaging apparatus IA and a drive portion DP described below via the operation apparatus OA, and the user can capture an image of a subject such as an animal under an imaging condition that the user desires.

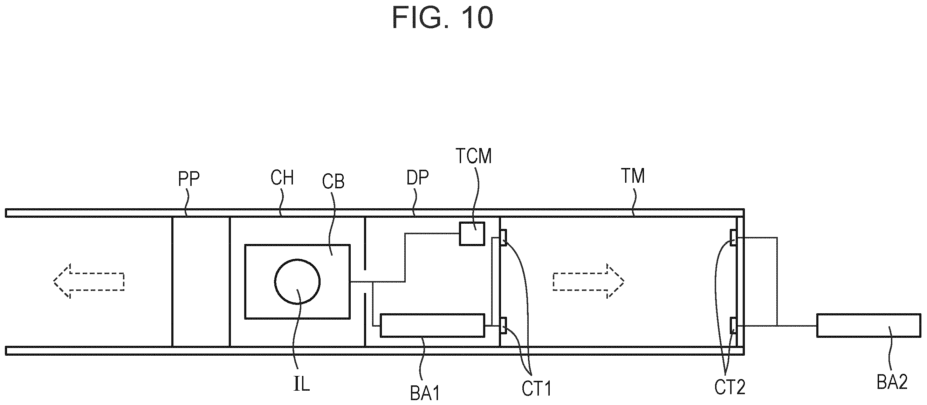

The imaging apparatus IA and the server SA may be connected by wire or may be connected wirelessly. When the imaging apparatus IA and the server SA are to be connected wirelessly, the imaging apparatus IA may include a communication controlling member (communication chip) for communicating with the server SA. Alternatively, for example, a communication controlling member TCM may be provided in a camera holder CH described below or in a drive portion DP, and the communication controlling member TCM and the imaging apparatus IA may be connected by wire in the holder HA (see Fig. 10).

The battery BA is a power source device for supplying electric power to the motor M1 and the motor M2. In the present embodiment, the imaging apparatus IA is driven by an internal power source. However, the imaging apparatus IA may also receive supply of electric power from the battery BA.

[Configuration of Holder HA]

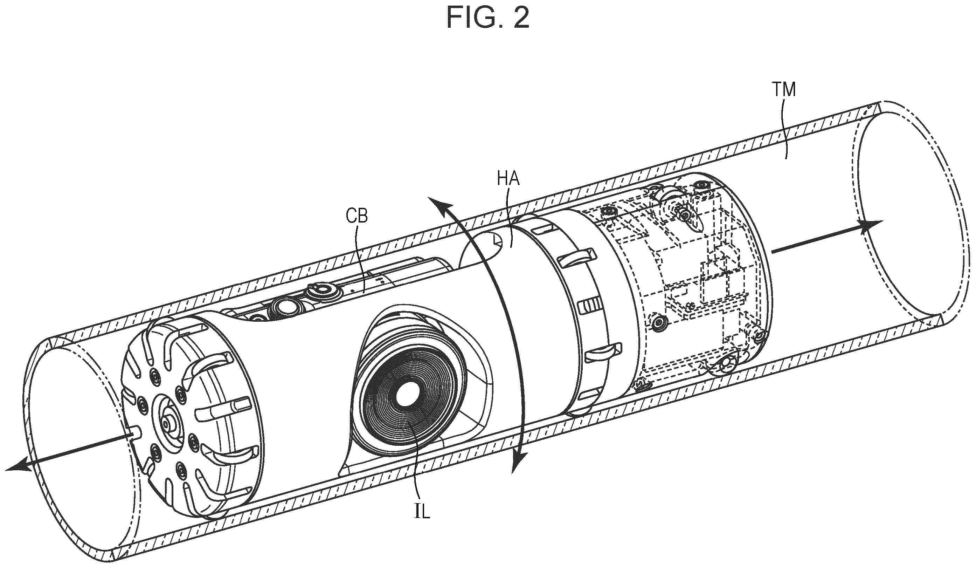

Next, the configuration of the holder (holding apparatus) HA will be described. Fig. 2 illustrates a state in which the holder HA is inserted into a transparent pipe (tubular member) TM. A camera body (camera body) CB is removably held by the holder HA, and an interchangeable lens IL is removably held by the camera body CB. In the present embodiment, the camera body CB and the interchangeable lens IL are collectively referred to as the imaging apparatus IA. However, the imaging apparatus IA may have a configuration such that a camera body and a lens are integrated.

As illustrated in Fig. 5, the interchangeable lens IL includes the imaging optical system IOS, which is a set of a plurality of lens units, and has an autofocus function.

The interchangeable lens IL may further have a variable-magnification function. The camera body CB includes the imaging device ID.

The position and the size of the imaging device ID in Fig. 5 are approximate position and size, which are different from actual position and size.

The holder HA, and the interchangeable lens IL and the camera body CB, which are held by the holder HA, are movable (movable back and forth) in the extension direction of the pipe TM (in the direction of a linear arrow in Fig. 2). The camera body CB and the interchangeable lens IL are rotatable (revolvable, swingable) in the up-down direction (in the direction of a curved arrow in Fig. 2) around the extension direction of the pipe TM or a direction that intersects the optical-axis direction of the interchangeable lens IL.

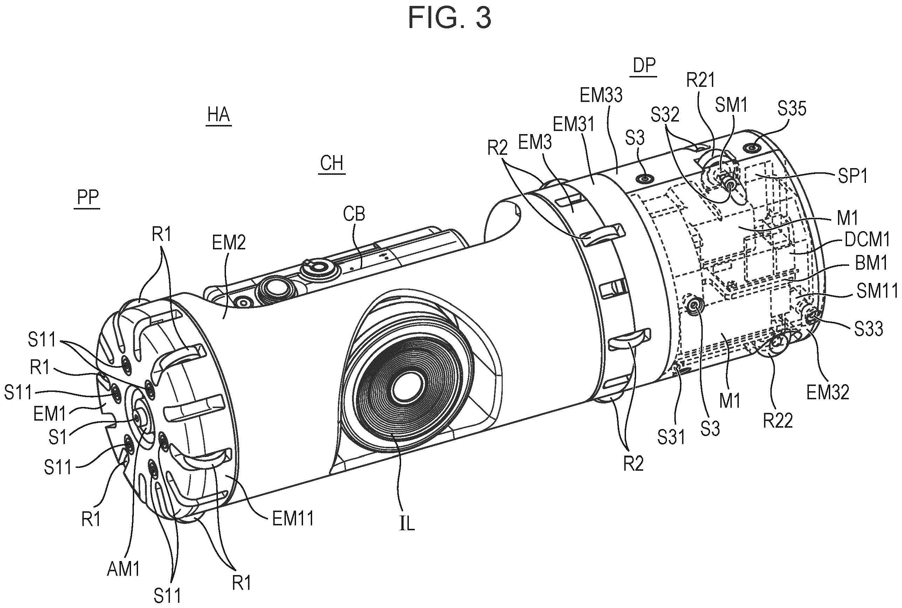

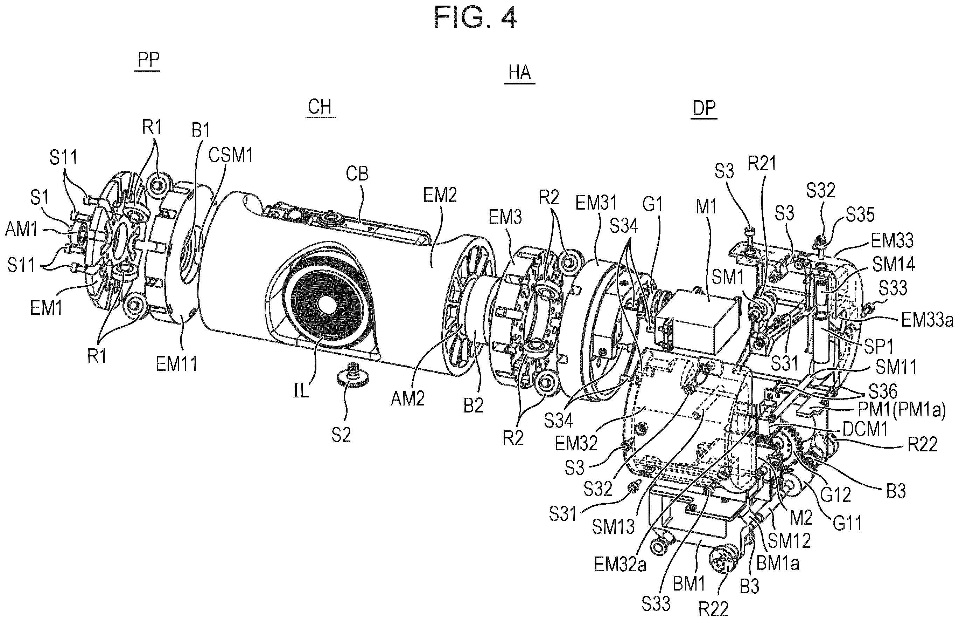

Fig. 3 is a perspective view of the holder HA, and Fig. 4 is an exploded perspective view of the holder HA. The holder HA includes a passive portion PP, the camera holder (holding portion) CH, and the drive portion DP. Hereafter, the passive portion PP, the camera holder CH, and the drive portion DP will be described.

[Configuration of Passive Portion PP]

The configuration of the passive portion PP will be described. The passive portion PP includes an exterior member (first exterior member) EM1 and an exterior member (second exterior member) EM11. The exterior member EM1 and the exterior member EM11 each have a plurality of recesses (grooves, cutouts), and a plurality of rollers R1 are each rotatably accommodated in a corresponding one of the plurality of recesses.

The rollers R1 are passive rollers, and are configured to rotate in contact with an inner peripheral portion (inner peripheral surface) of the pipe TM when the holder HA inserted into the pipe TM is moved by the drive portion DP. The passive portion PP includes a total of six rollers R1 provided at 60-degree intervals.

The exterior member EM1 is fixed to the exterior member EM11 with a plurality of screws S11. A screw S1 and an annular member (first annular member) AM1 are included in a plurality of members for connecting the passive portion PP to the camera holder CH. Details of a configuration for connecting the passive portion PP to the camera holder CH will be described below.

[Configuration of Camera Holder CH]

The configuration of the camera holder CH will be described. The camera holder CH includes an exterior member (third exterior member) EM2 and a screw S2. The screw S2 is a screw for fixing the camera body CB to the exterior member EM2, and is a male screw that meshes with a tripod fixing screw hole in a bottom portion of the camera body CB.

[Configuration for connecting Passive Portion PP to Camera Holder CH]

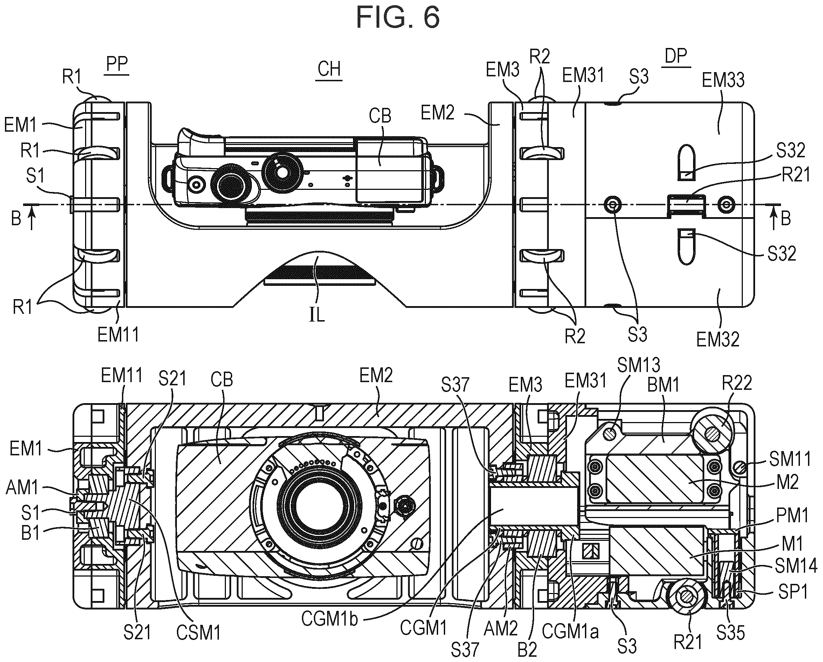

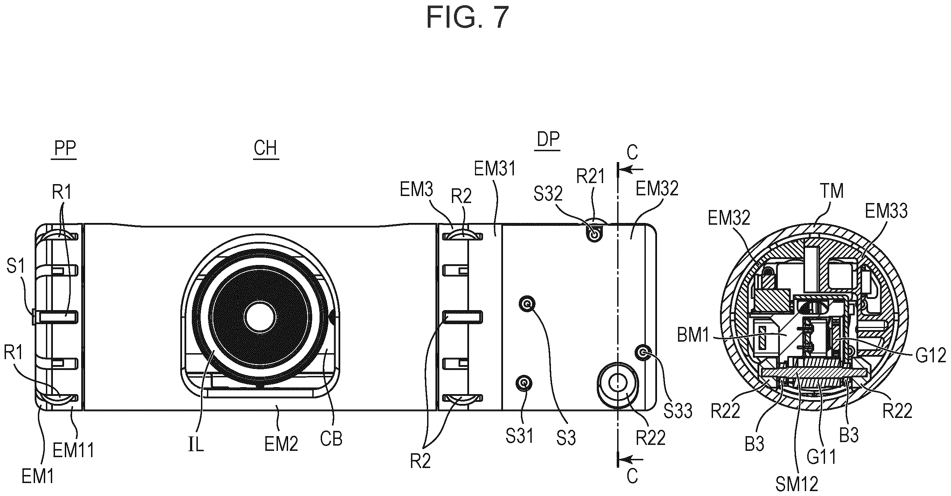

A configuration for connecting the passive portion PP to the camera holder CH will be described. Fig. 5 is a sectional view of the holder HA taken along line A-A, Fig. 6 is a sectional view of the holder HA taken along line B-B, and Fig. 7 is a sectional view of the holder HA taken along line C-C. A camera holder shaft (camera holder shaft member, or simply, shaft member) CSM1 is fixed to the exterior member EM2 with a plurality of screws S21. A screw hole is provided in a distal end of the camera holder shaft CSM1. A bearing B1 is provided between the exterior member EM1 and the exterior member EM11 so as to be sandwiched between the exterior member EM1 and the exterior member EM11, and the camera holder shaft CSM1 is inserted into a radially-inner portion of the bearing B1.

To be more specific, the bearing B1 is accommodated in an annular space formed by a stepped portion of the exterior member EM1 and a stepped portion of the exterior member EM11. The positional relationship between the camera holder shaft CSM1 and the exterior member EM2 in the axial direction is fixed while these are rotatable by the bearing B1 around the axial direction (the extension direction of the pipe TM) with respect to the passive portion PP.

The annular member AM1 is provided so as to cover the distal end of the camera holder shaft CSM1, and the screw S1 is inserted from above the annular member AM1 into the screw hole in the distal end of the camera holder shaft CSM1. That is, the position of the camera holder shaft CSM1, which is fixed to the exterior member EM2 with the plurality of screws S21, in the axial direction with respect to the exterior member EM1 and the exterior member EM11 is fixed by the screw S1, the annular member AM1, and the bearing B1. As a result, the passive portion PP is connected to the camera holder CH. In other words, the positional relationship between the passive portion PP and the camera holder CH in the axial direction (the extension direction of the pipe TM) is fixed.

[Configuration of Drive Portion DP]

The configuration of the drive portion DP will be described. The drive portion DP includes an exterior member (fourth exterior member) EM3, an exterior member (fifth exterior member) EM31, an exterior member (sixth exterior member) EM32, and an exterior member (seventh exterior member) EM33. The exterior member EM3 and the exterior member EM31 each have a plurality of recesses (grooves, cutouts), and a plurality of rollers R2 are each rotatably accommodated in a corresponding one of the plurality of recesses.

The rollers R2 are passive rollers, and are configured to rotate in contact with the inner peripheral portion of the pipe TM when the holder HA inserted into the pipe TM is moved by the drive portion DP. The drive portion DP includes a total of six rollers R2 provided at 60-degree intervals.

The exterior member EM31 is fixed to the exterior member EM3 with a plurality of screws S34, and the exterior member EM32 and the exterior member EM33 are fixed to the exterior member EM1 with a plurality of screws S3.

The exterior member EM32 and the exterior member EM33 are coupled to each other with a shaft member (first shaft member) SM1, a shaft member (second shaft member) SM11, and a shaft member (third shaft member) SM13. Screw holes are formed in both ends of each of the shaft members. The shaft member SM1 is fixed to the exterior member EM32 and the exterior member EM33 with a plurality of screws S32. The shaft member SM11 is fixed to the exterior member EM32 and the exterior member EM33 with a plurality of screws S33. The shaft member SM13 is fixed to the exterior member EM32 and the exterior member EM33 with a plurality of screws S31.

A roller R21 is supported by the shaft member SM1 so as be rotatable around the shaft member SM1. The roller R21 is a passive roller, and is configured to rotate in contact with the inner peripheral portion of the pipe TM when the holder HA inserted into the pipe TM is moved by the drive portion DP.

That is, the shaft member SM1 is a shaft member for coupling the exterior member EM32 and the exterior member EM33 of the drive portion DP, and is a shaft member that serves as the rotation shaft of the roller R21. In other words, the shaft member SM1 has both of a function of coupling the exterior member EM32 and the exterior member EM33 of the drive portion DP and a function as the rotation shaft of the roller R21. Since one member has a plurality of functions in this way, it is possible reduce the size of the drive portion DP and, by extension, the size of the holder HA.

[Configuration for rotating Rollers R22]

The drive portion DP includes the motor M2. The motor M2 is a motor for rotating (driving) rollers R22. The rollers R22 are drive rollers. The rollers R22 are press-fitted onto both ends of a shaft member (fourth shaft member) SM12 and each have a trapezoidal sectional shape. Thus, each of the rollers R22 is in contact with the inner peripheral portion of the pipe TM at two points, and it is possible to increase the contact area (contact points) compared with a cylindrical roller. As a result, the holder HA and, by extension, the imaging apparatus IA can stably move in the pipe TM.

When the holder HA is inserted into the pipe TM, the rollers R22 contact the inner peripheral portion of the pipe TM, and, when the rollers R22 are driven by the motor M2, the holder HA moves in the pipe TM. The motor M2 is held by a base member BM1. A gear member (first gear member) G12 is attached to the drive shaft of the motor M2. A gear member (second gear member) G11 is attached to the shaft member SM12. The shaft member SM12 is rotatably held by a plurality of bearings (third bearings) B3 that are respectively held by the base member BM1 and a metal plate member PM1.

The gear member G12 and the gear member G11 mesh with each other. Accordingly, when the motor M2 is driven, the gear member G12 rotates, so the gear member G11 and the shaft member SM12 rotate, and the rollers R22 fixed to the shaft member SM12 rotate. A drive controlling member DCM1 for controlling the motor M2 and the motor M1 is also held by the base member BM1.

[Configuration for pressing Rollers R22 against Inner Peripheral Portion of Pipe TM]

The drive portion DP includes the metal plate member PM1. The metal plate member PM1 is fixed to the base member BM1 with a plurality of screws S36. The metal plate member PM1 includes an arm portion PM1a that is elastically deformable. A shaft member (fifth shaft member) SM14 is fixed the exterior member EM33 with a screw S35, and a spring (elastic member) SP1 is provided on an outer periphery of the shaft member SM14 so as to be contactable with the arm portion PM1a.

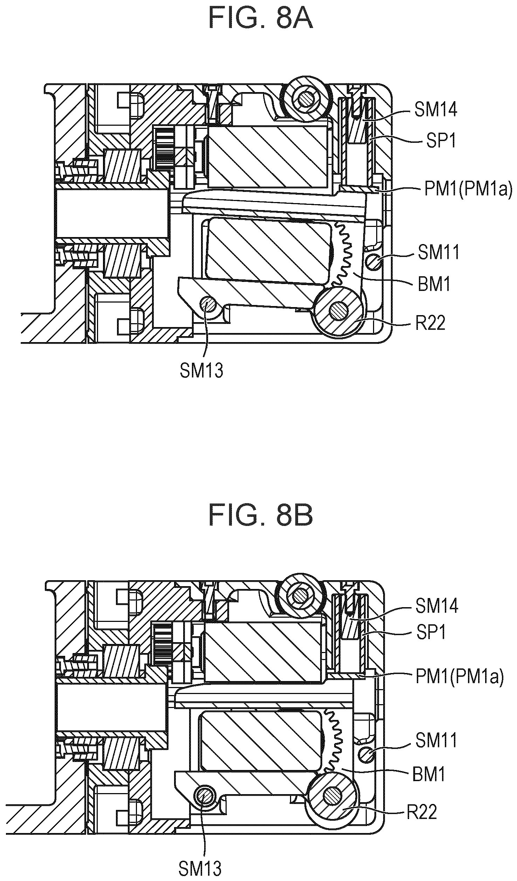

As illustrated in Figs. 8A and 8B, the base member BM1 is rotatable around the shaft member SM13 with respect to the exterior member EM32 and the exterior member EM33. As described above, the shaft member SM13 is a shaft member for coupling the exterior member EM32 and the exterior member EM33.

That is, the shaft member SM13 is a shaft member for coupling the exterior member EM32 and the exterior member EM33, and is a support member for rotatably supporting the base member BM1. In other words, the shaft member SM13 has both of a function of coupling the exterior member EM32 and the exterior member EM33 of the drive portion DP and a function of serving as the rotation shaft of the base member BM1. Since one member has a plurality of functions in this way, it is possible to reduce the size of the drive portion DP and, by extension, the size of the holder HA.

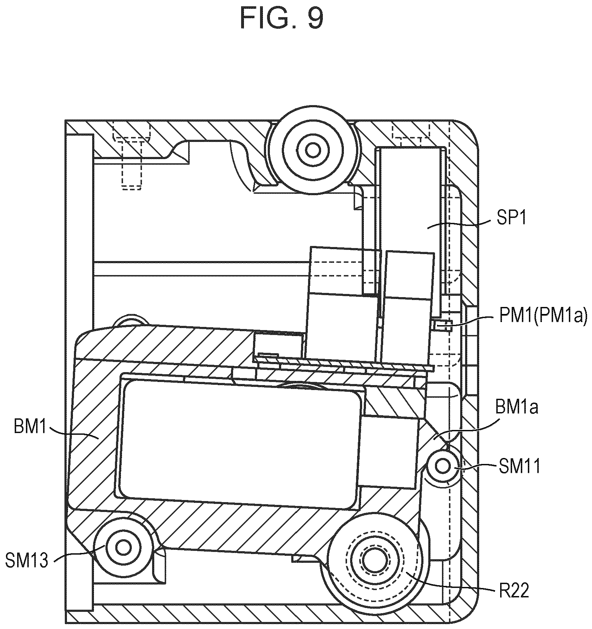

For convenience of description, for example, when the downward direction in the plane of Fig. 9 (viewed in the axial direction of the shaft member SM13) is defined as the gravitational direction, before the holder HA is inserted into the pipe TM, the base member BM1 is inclined in the clockwise direction around the shaft member SM13 in the plane of Fig. 9. At this time, as a stopper portion BM1a of the base member BM1 contacts the shaft member SM11 as illustrated in Fig. 9, the base member BM1 is supported so as not to become inclined further.

In other words, the stopper portion BM1a restricts rotation of the base member BM1. As described above, the shaft member SM11 is a shaft member for coupling the exterior member EM32 and the exterior member EM33. That is, the shaft member SM11 is a shaft member for coupling the exterior member EM32 and the exterior member EM33, and is a support member that can support the base member BM1.

In other words, the shaft member SM11 has both of a function of coupling the exterior member EM32 and the exterior member EM33 of the drive portion DP and a function of supporting the base member BM1 (rotation restricting function). Since one member has a plurality of functions in this way, it is possible to reduce the size of the drive portion DP and, by extension, the size of the holder HA.

When the holder HA is inserted into the pipe TM, the roller R22 is pushed upward in the plane of Figs. 8A and 8B by the inner peripheral portion of the pipe TM. As a result, the base member BM1 rotates counterclockwise around the shaft member SM15 in the plane of Figs. 8A and 8B, and the spring SP1 is compressed by the arm portion PM1a. At this time, due to the restoring force of the spring SP1, the arm portion PM1a is pushed back downward in the plane of Figs. 8A and 8B, and the base member BM1 attempts to rotate clockwise around the shaft member SM13 in the plane of Figs. 8A and 8B. As a result, the roller R22 is pressed against the inner peripheral portion of the pipe TM.

With this configuration, the state of contact of the roller R22 with the inner peripheral portion of the pipe TM is stabilized (it becomes easier for the roller R22 to contact the inner peripheral portion of the pipe TM), and the roller R22 can stably move (rotate). By extension, the holder HA and the imaging apparatus IA become stable with respect to the pipe TM.

The metal plate member PM1 has both of the function of pressing the roller R22 against the inner peripheral portion of the pipe TM as described above and the function of holding the bearings B3.

[Configuration for connecting Drive Portion DP to Camera Holder CH]

A configuration for connecting the drive portion DP to the camera holder CH will be described. An annular member (second annular member) AM2 is fixed to the exterior member EM2 with a plurality of screws S37. The annular member AM2 is a set collar made of a metal and having a slit.

A bearing (second bearing) B2 is provided between the annular member AM2 and a flange portion CGM1a of a cylindrical gear member (third gear member) CGM1. The cylindrical gear member CGM1 is a hollow shaft, and a gear is formed at an end portion thereof. A bearing B2 is provided between the exterior member EM3 and the exterior member EM31 so as to be sandwiched between the exterior member EM3 and the exterior member EM31, and the cylindrical gear member CGM1 is inserted into a radially-inner portion of the bearing B2.

To be more specific, the bearing B2 is accommodated in an annular space formed by a stepped portion of the exterior member EM3 and a stepped portion of the exterior member EM31. The camera holder shaft CSM1 fixed to the camera holder CH is inserted into the bearing B1 attached to the passive portion PP, and the passive portion PP is fixed so as to be rotatable with respect to the axial direction the camera holder shaft CSM1 of the camera holder CH.

A hole (female screw portion) AM2a is provided in the annular member AM2 as illustrated in Fig. 5, and the annular member AM2 clamps the cylindrical gear member CGM1 with the hole AM2a and a screw (not shown in Fig. 5). As a result, the positional relationship between the annular member AM2 and the cylindrical gear member CGM1 in the axial direction (extension direction the cylindrical gear member CGM1) is fixed. As illustrated in Fig. 5, the positional relationship between the cylindrical gear member CGM1 and the annular member AM2 is fixed so that the gear portion of the cylindrical gear member CGM1 meshes with the gear portion of a gear member (fourth gear member) G1.

The motor (second motor) M1 is fixed to the exterior member EM31. A gear member (second gear member) G1 is attached to the drive shaft of the motor M2. Accordingly, when the motor M1 is driven, the gear member G1 rotates, so the cylindrical gear member CGM1 rotates, and the exterior member EM2 to which the cylindrical gear member CGM1 is fixed, that is, the camera holder CH rotates.

That is, the motor (first motor) M2 for moving the holder HA in the pipe TM and the motor (second motor) M1 for rotating the camera holder CH are provided in the drive portion DP, and reduction in size of the entirety of the holder HA is realized. To be more specific, since the motor M1 and the motor M2 are provided in the drive portion DP and are disposed close to each other, it is sufficient that the drive controlling member DCM1 for controlling both motors be provided near the motors. That is, it is possible to realize reduction in size of the entirety of the holder DA by intensively disposing both motors and the control member in the drive portion DP.

In this way, the exterior member EM2 is fixed to the cylindrical gear member CGM1 whose position in the axial direction is fixed by the annular member AM2 with respect to the bearing B2 whose position in the axial direction is fixed in the drive portion DP. As a result, the drive portion DP is connected to the camera holder CH, and the camera holder CH is rotatable by the drive portion DP around the axial direction.

Since the camera holder CH is rotatable by the drive portion DP, the camera body CB and the interchangeable lens IL rotate. By making the drive portion DP controllable by a user, it is possible to adjust the imaging angle (direction of the curved arrow in Fig. 2) of the camera body CB and the interchangeable lens IL to an angle that the user desires.

As described above, the passive portion PP is also connected to the camera holder CH, and, as can be understood from the foregoing description, Fig. 3, and the like, the camera holder HA is supported so as to be sandwiched between the passive portion PP and the drive portion DP. In other words, the drive portion DP (the passive portion PP) is provided on a side opposite to the passive portion PP (the drive portion DP) with the camera holder HA sandwiched therebetween. With this configuration, the weight of the camera holder HA is supported by the passive portion PP and the drive portion DP at both ends, and load on the cylindrical gear member CGM1, which is the rotation shaft, can be reduced. As a result, bending and tilting can be suppressed, and it is possible to provide stable rotation and image.

[Summary]

As heretofore described, the holder HA is a holding apparatus that is insertable into the transparent pipe TM. The holder HA includes the camera holder CH that is capable of holding the imaging apparatus (the camera body CB and the interchangeable lens IL) IA including the imaging optical system IOS and the imaging device ID for capturing an image of the outside of the pipe TM. The holder HA further includes the drive portion DP that is capable of moving the holder HA in the pipe TM. With this configuration, since the holder HA can move in the pipe TM without receiving an effect of the outside (disturbance), the camera holder CH is stable, and the imaging apparatus IA is stable and can capture an image of a subject more stably than before.

The holder HA is a holding apparatus that is insertable into the pipe TM, and includes the camera holder CH that is capable of holding the imaging apparatus IA including the imaging optical system IOS and the imaging device ID. The holder HA further includes the drive portion DP that is capable of moving the holder HA in the pipe TM and the passive portion PP that is moved by the drive portion DP. The camera holder CH is supported so as to be sandwiched between the passive portion PP and the drive portion DP. With such a configuration, the camera holder CH is stabilized by being supported from left and right (front and back), and the imaging apparatus IA is stabilized and can capture an image of a subject more stably than before.

To be more specific, consider, for example, a layout that has a step because, for example, a platform or a tree is provided in an exhibit space in a zoo. Even for such a layout, by providing the pipe TM, since the holder HA and the imaging apparatus IA move in the pipe TM, it is possible to move the holder HA and the imaging apparatus IA stably without being affected by the road condition.

The holder HA is accommodated in the pipe TM. Therefore, when the holder HA and the imaging system IS according to the present embodiment are set, for example, in a zoo or the like, since an animal can touch only the outer peripheral surface of the pipe TM, it is possible to increase the safety for both of the imaging apparatus IA and the animal.

[Other Configurations]

As illustrated in Fig. 5, a hole CGM1b is provided in the cylindrical gear member CGM1. As illustrated in Fig. 4, a recess (cutout) EM32a is provided in the exterior member EM32, and a recess (cutout) EM33a is provided in the exterior member EM33. When the exterior member EM32 and the exterior member EM33 are connected, the recess EM32a and the recess EM33a form a hole (space). Through the hole CGM1b and the hole formed by the recess EM32a and the recess EM33a, it is possible to connect, by wire, the camera body CB to a server, a computer, and a battery that are outside of the holder HA. That is, the cylindrical gear member CGM1 has a function of spatially connecting the camera holder CH and the drive portion DP, in addition to a function of connecting the camera holder CH and the drive portion DP and a function of making the camera holder CH rotatable in the axial direction with respect to the drive portion DP.

In the present embodiment, the camera body CB and the interchangeable lens IL are both exiting products that have been marketed. In other words, the camera holder CH is configured to be capable of holding an existing imaging apparatus. Thus, it is possible to reduce production cost than when designing and manufacturing a new imaging apparatus. Moreover, it is possible to update only the imaging apparatus to a newest model.

The focal length of the imaging optical system IOS preferably satisfies a condition 20 mm ≤ 50 mm ≤ 80 mm and more preferably satisfies a condition 30 mm ≤ 50 mm ≤ 70 mm or 40 mm ≤ 50 mm ≤ 60 mm. By setting the focal length to around 50 mm, which is said to be close to the field of view of a human, it is possible to capture a more impactful image of a subject such as an animal, to be more specific, an image with which a viewer can easily feel a sensation as if the viewer has become a little person. The pipe TM is preferably set so that the height of the optical axis of the imaging optical system IOS from the setting surface of the pipe TM (for example, the ground surface) satisfies a condition 80 mm ≤ 100 mm ≤ 120 mm. When such a condition is satisfied, it is possible to capture a more impactful image of a subject such as an animal, to be more specific, an image with which a viewer can easily feel a sensation as if the viewer has become a little person.

Even when the pipe TM has not only a linear portion but also a curved portion, if the curvature is large and within a range such that the holder HA does not interfere with the inner peripheral surface of the pipe TM, the holder HA is movable in the pipe TM. In other words, the present embodiment is not limited to a case where the pipe TM has only a linear portion.

[Modifications]

In the first embodiment, the pipe TM is a transparent tubular member. However, the holder HA may be insertable into an opaque tubular member, and the imaging apparatus IA may capture an image of the inside of the tubular member.

Fig. 10 illustrates the configuration of a modification of the present embodiment. In the present embodiment, the camera body CB and the interchangeable lens IL (the imaging apparatus IA) are driven by an internal power source. However, in the present modification, the imaging apparatus IA receives supply of electric power from the battery BA1 provided in the drive portion DP. The battery BA1 is rechargeable by an external power source BA2. Charging terminals (first charging terminals) CT1 are provided on an outer side surface of the drive portion DP, and charging terminals (second charging terminals) CT2 connected to the external power source BA2 are provided at an end portion of the pipe TM. When the holder HA approaches the end portion of the pipe TM and the charging terminals CT1 contact the charging terminals CT2, electric power of the external power source BA2 is supplied to the battery BA1.

In the present embodiment, the imaging apparatus IA and the server SA perform communication by wire. However, in the present modification, the communication controlling member TCM provided in the drive portion DP and the camera body are connected by wire. As a result, the imaging apparatus IA can perform wireless communication with the server SA via the communication controlling member TCM.

For example, a plurality of holders HA and a plurality of imaging apparatuses IA may be provided in the same exhibit space so that a user can select a holder HA and an imaging apparatus IA that the user wants to use. In this case, the user can cause the viewpoint to jump by selecting an imaging apparatus IA that is capturing an image from a desirable direction, and can obtain a desired still image or moving image.

The pipe TM may be provided along a tree. By providing the pipe TM at a high position such as a position on a tree, it is possible to capture an image of an animal that lives on the tree.

The pipe TM may be provided not only on land but also in water. With the present system, which moves in the pipe TM, by sealing the pipe TM, it is not necessary to make the imaging apparatus IA waterproof, and it is possible to capture an image of an amphibious animal by seamlessly following the animal.

In the present embodiment, the camera body CB and the interchangeable lens IL are both existing products that have been marketed. However, the camera body CB and the interchangeable lens IL may be newly designed for the holder HA.

Instead of mounting the camera body CB and the interchangeable lens IL on the camera holder CH, the camera holder CH, the camera body CB, and the interchangeable lens IL may be integrated from the beginning.

The holder HA, the imaging apparatus IA, and the imaging system IS according to the present embodiment may be used not only to capture an image of an animal or the like in a zoo, an aquarium, or the like but also, for example, to perform live streaming, equipment inspection in an aquarium or of a gas pipe, or the like.

The pipe TM may have a double structure. To be more specific, the pipe TM may have a double structure including a pipe (first tubular member) for movably holding the holder HA and a pipe (second tubular member) provided outside thereof. Depending on the focusing performance of the imaging apparatus IA, an animal or the like may not be focused on if it is too close to the imaging apparatus IA. By making the pipe to have a double structure, it is possible to reduce the probability that an animal or the like cannot be focused on and to increase safety for both of the imaging apparatus IA and the animal.

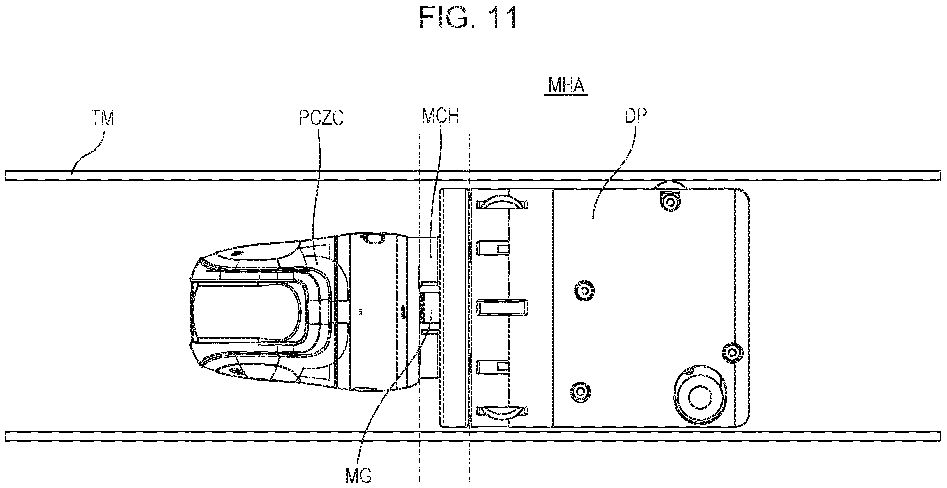

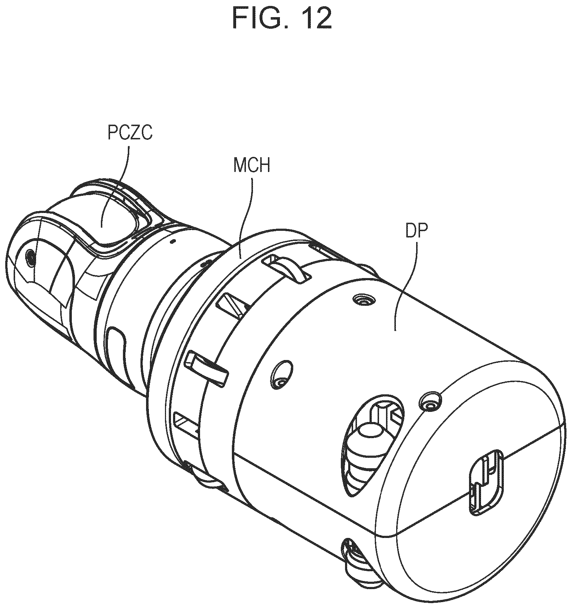

As in a modification illustrated in Figs. 11 and 12, the holding portion need not be supported so as to be sandwiched between the passive portion and the drive portion. Broken lines in Fig. 11 are imaginary lines representing boundaries between an imaging apparatus PCZC described below, a camera holder MCH, and a drive DP.

A holder (holding apparatus) MHA illustrated in Fig. 11 has the camera holder (holding portion) MCH that is capable of holding the imaging apparatus PCZC and the drive portion DP to which the camera holder MCH is connected, but does not have the passive portion PP illustrated in Fig. 3 and the like. Even with such a configuration, since the holder MHA can move in the pipe TM without receiving an effect of the outside (disturbance), the camera holder MCH is stable, and the imaging apparatus PCZC is stable and can capture an image of a subject more stably than before.

The imaging apparatus PCZC is an imaging apparatus that is capable of so-called panning, tilting, and zooming, and includes a mechanism, an imaging device, and an imaging optical system for these. The imaging apparatus PCZC can be operated by using an information device or the like that is connected wirelessly or by wire, and an operator can capture an image with a desired composition by using the panning, tilting, and zooming functions of the imaging apparatus PCZC. However, the panning, tilting, and zooming functions are not essential in the present modification. It is sufficient that the imaging apparatus can capture an image of the outside of a transparent tubular member.

The camera holder MCH includes a gear member MG. By rotating the gear member MG, it is possible to turn a screw (not shown in Figs. 11 and 12) into a screw hole (also not shown) provided in a bottom surface of the imaging apparatus PCZC. Thus, the imaging apparatus PCZC is fixed to the camera holder MCH. The camera holder MCH is fixed to the drive portion DP with a screw (also not shown) in the same way.

[Reference Examples]

Provided that a holding portion that is capable holding an imaging apparatus is movable in a tubular member, the holding apparatus need not have a drive portion. For example, a holding apparatus having a configuration such that a passive portion is provided on each of the front and back sides (or each of the left side and the right side depending on the viewpoint) of a holding portion that is capable of holding an imaging apparatus may be inserted into a tubular member, and the holding apparatus may be movable in the tubular member by an external force (for the holding apparatus) such as a pneumatic force.

Heretofore, embodiments of the present invention have been described. However, the present invention is not limited to these embodiments, and may be modified or changed in various ways within the gist thereof.

Disclosure of the present description includes a holding apparatus, a camera unit and an imaging system described below.

[Configuration 1]

A holding apparatus that is insertable into a transparent tubular member, comprising:

a holding portion that is capable of holding an imaging apparatus including an imaging optical system and an imaging device for capturing an image of an outside of the tubular member; and
a drive portion that is capable of moving the holding apparatus in the tubular member.

[Configuration 2]

The holding apparatus according to Configuration 1, further comprising:

a passive portion that is moved by the drive portion, wherein the holding portion is supported so as to be sandwiched between the passive portion and the drive portion.

[Configuration 3]

A holding apparatus that is insertable into a tubular member, comprising:

a holding portion that is capable of holding an imaging apparatus including an imaging optical system and an imaging device;
a drive portion that is capable of moving the holding apparatus in the tubular member; and
a passive portion that is moved by the drive portion,

wherein the holding portion is supported so as to be sandwiched between the passive portion and the drive portion.

[Configuration 4]

The holding apparatus according to Claim 2 or 3,
wherein the passive portion includes a plurality of passive rollers that are contactable with an inner peripheral surface of the tubular member.

[Configuration 5]

The holding apparatus according to any one of Configurations 1 to 4,
wherein the drive portion includes a plurality of passive rollers that are contactable with an inner peripheral surface of the tubular member, a plurality of drive rollers that are contactable with the inner peripheral surface of the tubular member, and a first motor for rotating the drive rollers.

[Configuration 6]

The holding apparatus according to any one of Configurations 1 to 5,

wherein the drive portion includes a plurality of exterior members and a shaft member for connecting the plurality of exterior members to each other, and wherein the shaft member holds at least one passive roller among the plurality of passive rollers.

[Configuration 7]

The holding apparatus according to any one of Configurations 1 to 6,

wherein the drive portion includes a plurality of exterior members, a shaft member for connecting the plurality of exterior members to each other, and a base member for holding the first motor, and wherein, when viewed in an axial direction of the shaft member, the base member is held so as to be rotatable around the axial direction of the shaft member.

[Configuration 8]

The holding apparatus according to any one of Configurations 1 to 7,

wherein the drive portion includes a plurality of exterior members and a shaft member for connecting the plurality of exterior members to each other, and wherein the base member includes a stopper portion that is capable of restricting rotation of the base member by contacting the shaft member.

[Configuration 9]

The holding apparatus according to any one of Configurations 1 to 8,

wherein the drive portion includes a metal plate member and an elastic member,
wherein the metal plate member is fixed to the base member,
wherein the metal plate member includes an arm portion that is contactable with the elastic member, and
wherein the drive portion is configured so that the plurality of drive rollers are capable of contacting the inner peripheral surface of the tubular member as a restoring force of the elastic member acts via the arm portion.

[Configuration 10]

The holding apparatus according to any one of Configurations 1 to 9,
wherein the drive rollers each have a trapezoidal shape.

[Configuration 11]

The holding apparatus according to Configuration 5,
wherein the drive portion includes a second motor for rotating the holding portion around a direction that intersects an optical axis of the imaging optical system.

[Configuration 12]

The holding apparatus according to Configuration 11,
wherein the holding portion includes a cylindrical gear member that is rotatable by the second motor and that has a hole.

[Configuration 13]

The holding apparatus according to any one of Configurations 1 to 12,

wherein the drive portion includes a plurality of exterior members,
wherein the plurality of exterior members each have a recess, and
wherein a hole is formed by the recesses when the plurality of exterior members are connected to each other.

[Configuration 14]

The holding apparatus according to any one of Configurations 1 to 13,
wherein the holding portion is capable of removably holding the imaging apparatus.

[Configuration 15]

The holding apparatus according to any one of Configurations 1 to 14,
wherein the imaging apparatus is an existing product.

[Configuration 16]

The holding apparatus according to any one of Configurations 1 to 15,
wherein a focal length of the imaging optical system satisfies

$$20 \ mm \leq 50 \ mm \leq 80 \ mm.$$

[Configuration 17]

The holding apparatus according to Configuration 16,
wherein the focal length of the imaging optical system satisfies

$$30 \ mm \leq 50 \ mm \leq 70 \ mm.$$

[Configuration 18]

The holding apparatus according to Configuration 18,
wherein the focal length of the imaging optical system satisfies

$$40 \ mm \leq 50 \ mm \leq 60 \ mm.$$

[Configuration 19]

A camera unit that is insertable into a transparent tubular member, comprising:

an imaging apparatus including an imaging optical system and an imaging device for capturing an image of an outside of the tubular member;
a holding portion that is capable of holding the imaging apparatus; and
a drive portion that is capable of moving the camera unit in the tubular member.

[Configuration 20]

The camera unit according to Configuration 19, further comprising:

a passive portion that is moved by the drive portion,

wherein the holding portion is supported so as to be sandwiched between the passive portion and the drive portion.

[Configuration 21]

A camera unit that is insertable into a tubular member, comprising:

an imaging apparatus including an imaging optical system and an imaging device;
a holding portion that is capable of holding the imaging apparatus;
a drive portion that is capable of moving the camera unit in the tubular member; and
a passive portion that is moved by the drive portion, wherein the holding portion is supported so as to be sandwiched between the passive portion and the drive portion.

[Configuration 22]

The camera unit according to Configuration 20 or 21,
wherein the passive portion includes a plurality of passive rollers that are contactable with an inner peripheral surface of the tubular member.

[Configuration 23]

The camera unit according to any one of Configurations 19 to 22,
wherein the drive portion includes a plurality of passive rollers that are contactable with an inner peripheral surface of the tubular member, a plurality of drive rollers that are contactable with the inner peripheral surface of the tubular member, and a first motor for rotating the drive rollers.

[Configuration 24]

The camera unit according to any one of Configurations 19 to 23,

wherein the drive portion includes a plurality of exterior members and a shaft member for connecting the plurality of exterior members to each other, and wherein the shaft member holds at least one passive roller among the plurality of passive rollers.

[Configuration 25]

The camera unit according to any one of Configurations 19 to 24,

wherein the drive portion includes a plurality of exterior members, a shaft member for connecting the plurality of exterior members to each other, and a base member for holding the first motor, and wherein, when viewed in an axial direction of the shaft member, the base member is held so as to be rotatable around the axial direction of the shaft member.

[Configuration 26]

The camera unit according to any one of Configurations 19 to 25,

wherein the drive portion includes a plurality of exterior members and a shaft member for connecting the plurality of exterior members to each other, and wherein the base member includes a stopper portion that is capable of restricting rotation of the base member by contacting the shaft member.

[Configuration 27]

The camera unit according to any one of Configurations 19 to 26,

wherein the drive portion includes a metal plate member and an elastic member,
wherein the metal plate member is fixed to the base member,
wherein the metal plate member includes an arm portion that is contactable with the elastic member, and
wherein the drive portion is configured so that the plurality of drive rollers are capable of contacting the inner peripheral surface of the tubular member as a restoring force of the elastic member acts via the arm portion.

[Configuration 28]

The camera unit according to any one of Configurations 19 to 27,
wherein the drive rollers each have a trapezoidal shape.

[Configuration 29]

The camera unit according to Configuration 23,
wherein the drive portion includes a second motor for rotating the holding portion around a direction that intersects an optical axis of the imaging optical system.

[Configuration 30]

The camera unit according to Configuration 29,
wherein the holding portion includes a cylindrical gear member that is rotatable by the second motor and that has a hole.

[Configuration 31]

The camera unit according to any one of Configurations 19 to 30,

wherein the drive portion includes a plurality of exterior members,
wherein the plurality of exterior members each have a recess, and
wherein a hole is formed by the recesses when the plurality of exterior members are connected to each other.

[Configuration 32]

The camera unit according to any one of Configurations 1 to 31,
wherein the holding portion is capable of removably holding the imaging apparatus.

[Configuration 33]

The camera unit according to any one of Configurations 19 to 32,
wherein the imaging apparatus is an existing product.

[Configuration 34]

The camera unit according to any one of Configurations 19 to 33,
wherein a focal length of the imaging optical system satisfies

$$20 \text{ mm} \leq 50 \text{ mm} \leq 80 \text{ mm}.$$

[Configuration 35]

The camera unit according to Configuration 34,
wherein the focal length of the imaging optical system satisfies

$$30 \text{ mm} \leq 50 \text{ mm} \leq 70 \text{ mm}.$$

[Configuration 36]

The camera unit according to Configuration 35,
wherein the focal length of the imaging optical system satisfies

$$40 \text{ mm} \leq 50 \text{ mm} \leq 60 \text{ mm}.$$

[Configuration 37]

An imaging system comprising:

a transparent tubular member; and

a camera unit that is insertable into the transparent tubular member, the camera unit including an imaging apparatus including an imaging optical system and an imaging device for capturing an image of an outside of the tubular member, a holding portion that is capable of holding the imaging apparatus, and a drive portion that is capable of moving the camera unit in the tubular member.

[Configuration 38]

An imaging system comprising:

a tubular member; and
a camera unit that is insertable into the tubular member, the camera unit including an imaging apparatus including an imaging optical system and an imaging device, a holding portion that is capable of holding the imaging apparatus, a drive portion that is capable of moving the camera unit in the tubular member, and a passive portion that is moved by the drive portion, wherein the holding portion is configured to be supported so as to be sandwiched between the passive portion and the drive portion.

[Configuration 39]

The imaging system according to Claim 37 or 38,
wherein the imaging apparatus and the drive portion are operable by an operation apparatus.

[Configuration 40]

The imaging system according to any one of Configurations 37 to 39, comprising:

a first charging terminal provided on the drive portion; and
a second charging terminal that is contactable with the first charging terminal as the camera unit moves in the tubular member.

The present invention is not limited to the embodiments described above and can be changed and modified in various ways without departing from the sprit and scope of the present invention. Accordingly, the following claims are attached to disclose the scope of the present invention.
This application claims the benefit of Japanese Patent Application No. 2022-079265 filed May 13, 2022 and Japanese Patent Application No. 2023-074206 filed April 28, 2023, which are hereby incorporated by reference herein in their entirety.

**Claims**

1. A holding apparatus that is insertable into a transparent tubular member, comprising:

   a holding portion that is capable of holding an imaging apparatus including an imaging optical system and an imaging device for capturing an image of an outside of the tubular member; and
   a drive portion that is capable of moving the holding apparatus in the tubular member.

2. The holding apparatus according to Claim 1, further comprising:

   a passive portion that is moved by the drive portion,
   wherein the holding portion is supported so as to be sandwiched between the passive portion and the drive portion.

3. A holding apparatus that is insertable into a tubular member, comprising:

   a holding portion that is capable of holding an imaging apparatus including an imaging optical system and an imaging device;
   a drive portion that is capable of moving the holding apparatus in the tubular member; and
   a passive portion that is moved by the drive portion,
   wherein the holding portion is supported so as to be sandwiched between the passive portion and the drive portion.

4. The holding apparatus according to Claim 2 or **3,** wherein the passive portion includes a plurality of passive rollers that are contactable with an inner peripheral surface of the tubular member.

5. The holding apparatus according to Claim 2 or 3, wherein the drive portion includes a plurality of passive rollers that are contactable with an inner peripheral surface of the tubular member, a plurality of drive rollers that are contactable with the inner peripheral surface of the tubular member, and a first motor for rotating the drive rollers.

6. The holding apparatus according to Claim 4,

   wherein the drive portion includes a plurality of exterior members and a shaft member for connecting the plurality of exterior members to each other, and
   wherein the shaft member holds at least one passive roller among the plurality of passive rollers.

7. The holding apparatus according to Claim 5,

   wherein the drive portion includes a plurality of exterior members, a shaft member for connecting the plurality of exterior members to each other, and a base member for holding the first motor, and
   wherein, when viewed in an axial direction of the shaft member, the base member is held so as to be rotatable around the axial direction of the shaft member.

8. The holding apparatus according to Claim 7,

   wherein the drive portion includes a plurality of exterior members and a shaft member for connecting the plurality of exterior members to each other, and
   wherein the base member includes a stopper portion that is capable of restricting rotation of the base member by contacting the shaft member.

9. The holding apparatus according to Claim 7,

   wherein the drive portion includes a metal plate member and an elastic member,
   wherein the metal plate member is fixed to the base member,
   wherein the metal plate member includes an arm portion that is contactable with the elastic member, and
   wherein the drive portion is configured so that the plurality of drive rollers are capable of contacting the inner peripheral surface of the tubular member as a restoring force of the elastic member acts via the arm portion.

10. The holding apparatus according to Claim 4, wherein the drive rollers each have a trapezoidal shape.

11. The holding apparatus according to Claim 5, wherein the drive portion includes a second motor for rotating the holding portion around a direction that intersects an optical axis of the imaging optical system.

12. The holding apparatus according to Claim 11, wherein the holding portion includes a cylindrical gear member that is rotatable by the second motor and that has a hole.

13. The holding apparatus according to Claim 1 or 3,

   wherein the drive portion includes a plurality of exterior members,
   wherein the plurality of exterior members each have a recess, and
wherein a hole is formed by the recesses when the plurality of exterior members are connected to each other.

14. The holding apparatus according to Claim 1 or 3, wherein the holding portion is capable of removably holding the imaging apparatus.

15. The holding apparatus according to Claim 1 or 3, wherein the imaging apparatus is an existing product.

16. The holding apparatus according to Claim 1 or 3, wherein a focal length of the imaging optical system satisfies

$$20 \ \mathrm{mm} \ \leq 50 \ \mathrm{mm} \ \leq 80 \ \mathrm{mm.}$$

17. The holding apparatus according to Claim 16, wherein the focal length of the imaging optical system satisfies

$$30 \ \mathrm{mm} \ \leq 50 \ \mathrm{mm} \ \leq 70 \ \mathrm{mm.}$$

18. The holding apparatus according to Claim 17, wherein the focal length of the imaging optical system satisfies

$$40 \ \mathrm{mm} \ \leq 50 \ \mathrm{mm} \ \leq 60 \ \mathrm{mm.}$$

19. A camera unit that is insertable into a transparent tubular member, comprising:

an imaging apparatus including an imaging optical system and an imaging device for capturing an image of an outside of the tubular member;
a holding portion that is capable of holding the imaging apparatus; and
a drive portion that is capable of moving the camera unit in the tubular member.

20. The camera unit according to Claim 19, further comprising:

a passive portion that is moved by the drive portion,
wherein the holding portion is supported so as to be sandwiched between the passive portion and the drive portion.

21. A camera unit that is insertable into a tubular member, comprising:

an imaging apparatus including an imaging optical system and an imaging device;

a holding portion that is capable of holding the imaging apparatus;
a drive portion that is capable of moving the camera unit in the tubular member; and
a passive portion that is moved by the drive portion,
wherein the holding portion is supported so as to be sandwiched between the passive portion and the drive portion.

22. The camera unit according to Claim 20 or 21, wherein the passive portion includes a plurality of passive rollers that are contactable with an inner peripheral surface of the tubular member.

23. The camera unit according to Claim 20 or 21, wherein the drive portion includes a plurality of passive rollers that are contactable with an inner peripheral surface of the tubular member, a plurality of drive rollers that are contactable with the inner peripheral surface of the tubular member, and a first motor for rotating the drive rollers.

24. The camera unit according to Claim 22,

wherein the drive portion includes a plurality of exterior members and a shaft member for connecting the plurality of exterior members to each other, and
wherein the shaft member holds at least one passive roller among the plurality of passive rollers.

25. The camera unit according to Claim 23,

wherein the drive portion includes a plurality of exterior members, a shaft member for connecting the plurality of exterior members to each other, and a base member for holding the first motor, and
wherein, when viewed in an axial direction of the shaft member, the base member is held so as to be rotatable around the axial direction of the shaft member.

26. The camera unit according to Claim 25,

wherein the drive portion includes a plurality of exterior members and a shaft member for connecting the plurality of exterior members to each other, and
wherein the base member includes a stopper portion that is capable of restricting rotation of the base member by contacting the shaft member.

27. The camera unit according to Claim 25,

wherein the drive portion includes a metal plate member and an elastic member,
wherein the metal plate member is fixed to the base member,
wherein the metal plate member includes an arm portion that is contactable with the elastic member, and
wherein the drive portion is configured so that the plurality of drive rollers are capable of contacting the inner peripheral surface of the tubular member as a restoring force of the elastic member acts via the arm portion.

28. The camera unit according to Claim 22,
wherein the drive rollers each have a trapezoidal shape.

29. The camera unit according to Claim 23,
wherein the drive portion includes a second motor for rotating the holding portion around a direction that intersects an optical axis of the imaging optical system.

30. The camera unit according to Claim 29,
wherein the holding portion includes a cylindrical gear member that is rotatable by the second motor and that has a hole.

31. The camera unit according to Claim 19 or 21,

wherein the drive portion includes a plurality of exterior members,
wherein the plurality of exterior members each have a recess, and
wherein a hole is formed by the recesses when the plurality of exterior members are connected to each other.

32. The camera unit according to Claim 19 or 21,
wherein the holding portion is capable of removably holding the imaging apparatus.

33. The camera unit according to Claim 19 or 21,
wherein the imaging apparatus is an existing product.

34. The camera unit according to Claim 19 or 21,
wherein a focal length of the imaging optical system satisfies

$$20 \text{ mm} \leq 50 \text{ mm} \leq 80 \text{ mm}.$$

35. The camera unit according to Claim 34,
wherein the focal length of the imaging optical system satisfies

$$30 \text{ mm} \leq 50 \text{ mm} \leq 70 \text{ mm}.$$

36. The camera unit according to Claim 35,
wherein the focal length of the imaging optical system satisfies

$$40 \text{ mm} \leq 50 \text{ mm} \leq 60 \text{ mm}.$$

37. An imaging system comprising:

a transparent tubular member; and
a camera unit that is insertable into the transparent tubular member, the camera unit including an imaging apparatus including an imaging optical system and an imaging device for capturing an image of an outside of the tubular member, a holding portion that is capable of holding the imaging apparatus, and a drive portion that is capable of moving the camera unit in the tubular member.

38. An imaging system comprising:

a tubular member; and
a camera unit that is insertable into the tubular member, the camera unit including an imaging apparatus including an imaging optical system and an imaging device, a holding portion that is capable of holding the imaging apparatus, a drive portion that is capable of moving the camera unit in the tubular member, and a passive portion that is moved by the drive portion, wherein the holding portion is configured to be supported so as to be sandwiched between the passive portion and the drive portion.

39. The imaging system according to Claim 37 or 38,
wherein the imaging apparatus and the drive portion are operable by an operation apparatus.

40. The imaging system according to Claim 37 or 38,
comprising:

a first charging terminal provided on the drive portion; and
a second charging terminal that is contactable with the first charging terminal as the camera unit moves in the tubular member.

# FIG. 1

FIG. 2

EP 4 524 650 A1

FIG. 3

FIG. 4

FIG. 5

FIG. 6

FIG. 7

# FIG. 8A

SM14
SP1
PM1(PM1a)
SM11
BM1
R22
SM13

# FIG. 8B

SM14
SP1
PM1(PM1a)
SM11
BM1
R22
SM13

FIG. 9

# FIG. 10

FIG. 11

# FIG. 12

## INTERNATIONAL SEARCH REPORT

| International application No. |
| --- |
| **PCT/JP2023/017494** |

### A. CLASSIFICATION OF SUBJECT MATTER

*G03B 17/56*(2021.01)i; *G03B 15/00*(2021.01)i; *G03B 37/00*(2021.01)i; *H04N 23/50*(2023.01)i; *H04N 23/51*(2023.01)i; *H04N 23/695*(2023.01)i

FI: G03B17/56 A; G03B15/00 P; G03B15/00 W; G03B15/00 L; G03B37/00 A; H04N23/51; H04N23/695; H04N23/50

According to International Patent Classification (IPC) or to both national classification and IPC

### B. FIELDS SEARCHED

Minimum documentation searched (classification system followed by classification symbols)

G03B17/56; G03B15/00; G03B37/00; H04N23/50; H04N23/51; H04N23/695

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2005-210682 A (SANO, Sho, KONNO, Sadaki) 04 August 2005 (2005-08-04) paragraphs [0021]-[0026], fig. 7-8 | 1-5, 10, 14-23, 28, 32-38, 40 |
| Y | | 11-13, 29-31, 39 |
| A | | 6-9, 24-27 |
| Y | JP 2010-11199 A (CANON INC) 14 January 2010 (2010-01-14) paragraphs [0014]-[0017], fig. 2 | 11-12, 29-30 |
| Y | JP 08-032845 A (MASUDA DENKI KK) 02 February 1996 (1996-02-02) paragraphs [0007]-[0008], fig. 1, 5 | 13, 31, 39 |
| A | JP 2020-027960 A (CANON INC) 20 February 2020 (2020-02-20) entire text, all drawings | 1-40 |
| A | JP 2008-236582 A (TAKAYAMA KAIKEI JIMUSHO KK) 02 October 2008 (2008-10-02) entire text, all drawings | 1-40 |

☑ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **23 June 2023** | **25 July 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2023/017494**

**C.** **DOCUMENTS CONSIDERED TO BE RELEVANT**

| Category* | Citation of document, with indication, where appropriate, of the relevant passages | Relevant to claim No. |
|---|---|---|
| A | JP 63-236490 A (MATSUSHITA ELECTRIC WORKS LTD) 03 October 1988 (1988-10-03) entire text, all drawings | 1-40 |

Form PCT/ISA/210 (second sheet) (January 2015)

**INTERNATIONAL SEARCH REPORT**
Information on patent family members

International application No.

**PCT/JP2023/017494**

| Patent document cited in search report | | | Publication date (day/month/year) | Patent family member(s) | Publication date (day/month/year) |
|---|---|---|---|---|---|
| JP | 2005-210682 | A | 04 August 2005 | WO 2005/064917 A1 paragraphs [0023]-[0028], fig. 7-8 | |
| JP | 2010-11199 | A | 14 January 2010 | (Family: none) | |
| JP | 08-032845 | A | 02 February 1996 | (Family: none) | |
| JP | 2020-027960 | A | 20 February 2020 | (Family: none) | |
| JP | 2008-236582 | A | 02 October 2008 | (Family: none) | |
| JP | 63-236490 | A | 03 October 1988 | (Family: none) | |

Form PCT/ISA/210 (patent family annex) (January 2015)

**REFERENCES CITED IN THE DESCRIPTION**

**Patent documents cited in the description**

- JP 2021176024 A
- JP 2022079265 A
- JP 2023074206 A